# DEMANDE DE BREVET EUROPEEN

(11) **EP 4 760 440 A1**
(43) Date de publication de la demande: **17.06.2026**
(21) Numéro de dépôt: 25203074.7
(22) Date de dépôt: 18.09.2025
(51) Int. Cl.: G05D 1/87, B64C 13/50, G05D 109/25

(54) **SYSTÈME DE COMMANDE DE VOL AYANT UN ACTIONNEUR ÉLECTRIQUE POUR CONTRÔLER UNE SERVOCOMMANDE HYDRAULIQUE**

(30) Priorité: 12.12.2024 FR 2413949
(71) Demandeur: Airbus Helicopters, 13725 Marignane Cedex (FR)
(72) Inventeur: LETONNELIER, Clément, 13580La Fare-les-Oliviers (FR); IZZO, Pascal, 13130 Berre-l'Étang (FR)
(74) Mandataire: GPI Brevets

(57) **Abrégé**

La présente invention concerne un système (10) de commande de vol électrique comprenant un sous-ensemble d'actionnement (C), ayant trois calculateurs duplex externes (21, 24, 27) pour commander un actionneur (40) électrique. L'actionneur (40) électrique a trois stators (42, 43, 44) connectés électriquement à trois dispositifs de basculement (50) respectifs, les dispositifs de basculement (50) étant reliés électriquement à un même calculateur simplex interne (80) de l'actionneur (40) électrique, chaque dispositif de basculement (50) étant connecté à un des calculateurs duplex externes (21, 24, 27) respectif, chaque dispositif de basculement (50) étant configuré pour connecter au stator (42, 43, 44) associé le calculateur simplex interne (80) ou le calculateur duplex externe (21, 24, 27) respectif, le calculateur simplex interne (80) étant automonitoré et communiquant avec les trois calculateurs duplex externes (21, 24, 27).

## Description

La présente invention concerne un système de commande de vol ayant un actionneur électrique pour contrôler une servocommande hydraulique.

Un aéronef peut comporter des gouvernes aérodynamiques mobiles pilotées par un système de commande de vol électrique pour diriger l'aéronef. De telles gouvernes aérodynamiques peuvent comprendre des pales de rotor, des pales d'hélices, des volets de profondeur ou de direction par exemple.

Un système de commande de vol électrique peut comporter plusieurs sous-ensembles d'acquisition d'une commande de pilotage. Chaque sous-ensemble d'acquisition d'une commande de pilotage peut être intégré au sein d'un organe de pilotage manœuvrable par un pilote, tel qu'un manche par exemple, pour encoder une commande à la suite de la manœuvre de l'organe de pilotage. De plus, le système de commande de vol comporte un sous-ensemble de traitement déterminant une consigne positionnelle à atteindre pour positionner de la manière requise une ou des gouvernes aérodynamiques en fonction d'au moins une commande encodée par un sous-ensemble d'acquisition de la commande de pilotage et de l'état situationnel courant de l'aéronef. Une telle consigne positionnelle peut être un angle de pas d'une pale, un angle de déflection d'un volet ou encore une vitesse de rotation d'un rotor ou d'une hélice par exemple. Enfin, le système de commande de vol comporte au moins un sous-ensemble d'actionnement commandant un actionneur agissant sur une ou plusieurs gouvernes aérodynamiques en fonction d'une consigne positionnelle déterminée par le sous-ensemble de traitement.

Les règlements de certification imposent pour un tel système de commande de vol un taux d'occurrence de panne inférieur ou égal à 10⁻⁹/heure de vol, ce qui conduit à un taux d'occurrence de panne inférieur ou égal à 10⁻¹⁰/heure de vol pour chaque sous-ensemble.

En outre, des équipements des sous-ensembles d'un système de commande de vol électrique d'un aéronef peuvent faire partie d'une liste d'équipements de référence dénommée en anglais « Master Minimum Equipment List (MMEL) ». Cette liste définit la liste des équipements qui peuvent être inopérants pour le vol, les conditions à respecter pour permettre un vol en conformité avec les objectifs des autorités de certification et le nombre de jours ou heures de vol autorisés à partir de la découverte de la panne. Cette condition supplémentaire amène d'autres contraintes et induit en particulier l'atteinte d'un taux d'occurrence de panne pour le système de commande de vol inférieur ou égal à une valeur comprise entre 10⁻⁷ et 10⁻⁸/heure de vol avec un équipement de référence en panne, soit un taux d'occurrence de panne au niveau des sous-ensembles inférieur ou égal à une valeur comprise entre 10⁻⁸ et 10⁻⁹/heure de vol avec un équipement de référence en panne. Il est à noter qu'un équipement dont la probabilité d'occurrence de panne est inférieure à un seuil d'acceptabilité, typiquement de 10⁻⁵/heure de vol, n'est pas considéré. Autrement dit on accepte que la panne d'un équipement ayant un taux de panne inférieur au seuil d'acceptabilité entraine une immobilisation de l'aéronef.

Par suite, chaque sous-ensemble doit donc présenter un taux d'occurrence de panne de 10⁻¹⁰/heure de vol en conditions normales et le cas échéant de 10⁻⁸ à 10⁻⁹/heure de vol en conditions MMEL, à savoir si le vol est autorisé pendant un certain nombre d'heures de vol en cas de panne d'un équipement de référence du sous-ensemble.

En particulier, un système de commande de vol électrique peut comprendre un actionneur électrique muni d'un arbre de puissance mobile pour contrôler une servocommande hydraulique en déplaçant une tige de la servocommande par rapport à au moins un corps de la servocommande. A titre d'exemple, un giravion peut comprendre plusieurs servocommandes hydrauliques à corps fixes pilotées par des actionneurs électriques respectifs, chaque servocommande ayant une tige de puissance mobile articulée à un dispositif à plateau cyclique, ce dispositif à plateau cyclique étant articulé à au moins une biellette de pas, chaque biellette de pas étant articulée à une pale à pas variable.

Dans ce contexte, un sous-ensemble d'actionnement classique peut comporter un actionneur électrique muni de quatre stators pour mettre conjointement en mouvement un organe rotorique. Chaque stator est piloté par un calculateur d'actionnement associé en fonction d'une consigne positionnelle à atteindre, d'une information de position relative entre le stator et le rotor mesurée à l'aide d'un senseur de position associé, et d'une position de la servocommande mesurée avec un senseur positionnel associé de la servocommande. Ainsi, l'actionneur électrique comporte quatre stators pilotés par quatre calculateurs d'actionnement respectifs, l'actionneur électrique comprenant quatre senseurs de position en communication respectivement avec les quatre calculateurs d'actionnement, la servocommande comprenant quatre senseurs positionnels en communication respectivement avec les quatre calculateurs d'actionnement. Chaque calculateur d'actionnement est en outre un calculateur duplex synchrone.

L'expression « calculateur duplex » désigne ici et par la suite un calculateur qui comporte deux voies de calcul indépendantes dont l'exécution est synchronisée contrairement à un calculateur simplex qui ne comporte qu'une seule voie de calcul. L'expression « voie de calcul » désigne une unité de traitement digitale et/ou analogique qui permet d'effectuer des calculs sur des grandeurs représentées de façon digitale et ou analogique. L'unité de traitement peut effectuer un traitement digital avec un processeur ou d'autre formes de circuit intégré dont des circuits logiques. L'unité de traitement peut effectuer un traitement analogique avec des composants analogiques intégrés ou non dans des circuits intégrés tels, par exemple, des amplificateurs opérationnels. Le terme processeur peut désigner aussi bien une unité centrale de traitement connue sous l'acronyme CPU, une unité graphique de traitement GPU, une unité digitale connue sous l'acronyme DSP, un microcontrôleur, etc. A titre d'exemple, un calculateur duplex peut comprendre deux voies de calcul ayant chacune un processeur, alors qu'un calculateur simplex comporte une unique voie de calcul ayant par exemple un processeur.

Un tel sous-système d'actionnement permet d'atteindre un taux d'occurrence de panne inférieur ou égal à 10⁻¹⁰/heure de vol en conditions normales, et de 10⁻⁹/heure de vol en conditions MMEL, mais nécessite des nombres importants de stators, de calculateurs et de liens d'interconnexion, ce qui peut induire un coût, une masse et/ou un encombrement non négligeables.

Le document US 12024306 B2 n'appartient pas au domaine technique en décrivant un système hydraulique comprenant un premier actionneur hydraulique commandé par un premier dispositif de commande d'actionneur et un deuxième actionneur hydraulique commandé par un deuxième dispositif de commande d'actionneur. Le système d'actionnement est en outre muni d'un dispositif de commande d'actionneur redondant partagé et d'au moins un dispositif de transfert connecté de manière opérationnelle aux dispositifs de commande d'actionneur précités.

L'arrière-plan technologique de l'invention comporte les documents US 2018/0102721, US 2023/0227174 et US 2021/0099050.

La présente invention a alors pour objet de proposer un système de commande de vol électrique innovant apte à atteindre un taux d'occurrence de panne inférieur ou égal à 10⁻¹⁰/heure de vol en conditions normales, et de 10⁻⁸ à 10⁻⁹/heure de vol en conditions MMEL.

La présente invention concerne un système de commande de vol électrique pour commander une servocommande hydraulique, ledit système de commande de vol comprenant un sous-ensemble de traitement générant au moins une consigne positionnelle, ledit système de commande de vol comprenant un sous-ensemble d'actionnement, ledit système de commande de vol comprenant un actionneur électrique pour contrôler la servocommande, ledit actionneur électrique comprenant une pluralité de stators et un organe rotorique mis en mouvement par cette pluralité de stators.

Le sous-ensemble d'actionnement comporte trois calculateurs duplex externes pour commander ledit actionneur électrique en fonction de ladite au moins une consigne positionnelle, ladite pluralité de stators comportant uniquement trois stators connectés électriquement à trois dispositifs de basculement respectifs de l'actionneur électrique, les dispositifs de basculement étant reliés électriquement à un même calculateur simplex interne de l'actionneur électrique, chaque dispositif de basculement étant connecté à un des calculateurs duplex externes respectifs, chaque dispositif de basculement étant configuré pour connecter au stator associé le calculateur simplex interne ou le calculateur duplex externe respectif, le calculateur simplex interne étant auto-monitoré et communiquant avec les trois calculateurs duplex externes.

Les termes « externe » et « interne » sont utilisés pour distinguer les calculateurs duplex dits « externes » présents en dehors de l'actionneur électrique, du calculateur simplex présent dans l'actionneur électrique.

Les calculateurs duplex externes et le calculateur simplex interne sont en outre dissimilaires, de fait intrinsèquement mais éventuellement aussi au niveau des composants. Par exemple, le processeur du calculateur simplex est différent des processeurs des calculateurs duplex externes. Eventuellement, les calculateurs duplex externes sont similaires.

Ainsi, contrairement à un système de commande de vol classique ayant un actionneur électrique comprenant quatre stators connectés à quatre calculateurs externes, l'actionneur électrique comporte uniquement trois stators pour générer des champs magnétiques tournant permettant de mettre en mouvement l'organe rotorique.

Dans le cas nominal, les trois stators sont respectivement commandés par les trois calculateurs duplex externes via les trois dispositifs de basculement. Le calculateur simplex interne est alors en attente active. Ce calculateur simplex interne s'assure que les calculateurs duplex externes fonctionnent correctement à l'aide de signaux de validité transmis par les calculateurs duplex externes.

En cas de panne d'un calculateur duplex externe, le stator associé est alors contrôlé par le calculateur simplex interne, le dispositif de basculement connectant le calculateur simplex interne au stator en lieu et place du calculateur duplex externe en panne. Ce calculateur simplex interne présente les particularités d'être intégré directement au sein de l'actionneur électrique et d'implémenter une unité de traitement auto-monitorée pour assurer son intégrité. Un tel calculateur simplex interne peut atteindre un taux d'occurrence de panne inférieur ou égal à 10⁻⁵/heure de vol ce qui peut permettre de sortir l'actionneur de la liste d'équipements de référence.

Un tel actionneur électrique permet alors de n'utiliser qu'un nombre restreint de stators, senseurs, et de liens d'interconnexion afin d'obtenir un sous-système d'actionnement ayant un taux d'occurrence de panne inférieur ou égal à 10⁻¹⁰/heure de vol en conditions normales, et de 10⁻⁸ à 10⁻⁹/heure de vol en conditions MMEL. Ainsi, un tel système de commande de vol peut présenter un coût, une masse et/ou un encombrement optimisés. Le passage de quatre calculateurs duplex externes à trois calculateurs duplex externes et un calculateur interne simplex intégré à l'actionneur électrique offre un gain en termes de câblage, de poids et de volume, mais également un coût plus optimisé du fait de la suppression d'un calculateur duplex externe alors que l'intégration d'un calculateur interne simplex dans l'actionneur électrique a un impact financier limité.

L'actionneur électrique peut en outre présenter une ou plusieurs des caractéristiques qui suivent, prises seules ou en combinaison.

Ainsi, chaque calculateur duplex externe peut comporter une voie de commande générant un signal de commande externe en fonction au moins de ladite au moins une consigne positionnelle, chaque calculateur duplex externe comportant une voie de surveillance générant un signal de validité.

Chaque calculateur duplex externe peut être d'un type usuel pour fournir le signal de commande et le signal de validité.

Par exemple, ledit actionneur électrique peut comporter trois senseurs de position primaire mesurant chacun une position angulaire de l'organe rotorique, les trois senseurs de position primaire étant connectés respectivement aux trois calculateurs duplex externes, chaque calculateur duplex externe étant configuré pour générer un signal de commande externe en fonction au moins de ladite au moins une consigne positionnelle et de ladite position angulaire.

Les calculateurs duplex externes contrôlent alors l'alimentation électrique des stators en fonction au moins des positions mesurées par les senseurs de position primaires. Seuls trois senseurs de position primaires sont alors nécessaires. Cette caractéristique peut optimiser le coût, la masse et/ou l'encombrement du système.

La voie de commande peut, par exemple, générer le signal de commande en appliquant une loi mémorisée donnant les caractéristiques du signal de commande en fonction au minimum de la consigne positionnelle et de la position angulaire reçue.

Eventuellement, chaque calculateur duplex externe peut être configuré pour recevoir une position courante d'un organe de la servocommande, chaque calculateur duplex externe étant configuré pour générer un signal de commande externe en fonction de ladite au moins une consigne positionnelle et de ladite position angulaire ainsi que la position courante.

Selon une possibilité compatible avec les précédentes, chaque dispositif de basculement peut être connecté à la voie de commande et à la voie de surveillance du calculateur duplex externe correspondant, chaque dispositif de basculement étant connecté au calculateur simplex interne pour pouvoir recevoir un signal de commande interne et un signal de sélection émis par ce calculateur simplex interne, chaque dispositif de basculement étant configuré pour transmettre au stator correspondant le signal de commande interne ou le signal de commande externe en fonction du signal de sélection et du signal de validité.

Un tel dispositif de basculement s'avère ainsi simple et efficace.

Chaque dispositif de basculement est ainsi contrôlé par le calculateur duplex externe associé et par le calculateur simplex interne pour transmettre au stator soit le signal de commande interne, soit le signal de commande externe. Le basculement du calculateur duplex externe au calculateur simplex interne pour piloter l'alimentation électrique d'un stator est basé sur l'état de validité du calculateur duplex externe transmis via le signal de validité. Ce signal de validité est élaboré par le calculateur duplex externe de manière classique, par exemple à partir d'éléments d'intégrité interne et après consolidation entre les voies de calcul de commande et de surveillance.

De plus, le basculement du calculateur duplex externe au calculateur simplex interne pour un stator est aussi basé sur le signal de sélection. Le calculateur simplex interne peut émettre pour chaque dispositif de basculement, un signal de sélection à partir des signaux de validité émis par les calculateurs duplex externes et de son état d'intégrité propre. Le calculateur simplex interne peut s'assurer d'émettre un seul signal de sélection à la fois.

Par exemple, chaque dispositif de basculement peut comporter un premier interrupteur et un quatrième interrupteur connectés en série à la voie de commande du calculateur duplex externe correspondant et au stator correspondant, chaque dispositif de basculement comportant un deuxième interrupteur et un troisième interrupteur connectés en série au calculateur simplex interne pour pouvoir recevoir le signal de commande interne et au stator correspondant, le premier interrupteur et le quatrième interrupteur étant reliés électriquement à la voie de surveillance du calculateur duplex externe correspondant pour être chacun placé dans un état ouvert ou fermé en fonction du signal de validité reçu, le deuxième interrupteur étant relié électriquement, éventuellement par une porte inverseuse, à la voie de surveillance du calculateur duplex externe correspondant pour être placé dans un état ouvert ou fermé en fonction du signal de validité reçu, le troisième interrupteur étant relié électriquement au calculateur simplex interne pour pouvoir recevoir le signal de sélection pour être placé dans un état ouvert ou fermé en fonction du signal de sélection reçu.

Les interrupteurs permettent au dispositif de basculement de transmettre au stator associé soit le signal de commande interne, soit le signal de commande externe. Chaque interrupteur peut prendre par exemple la forme d'un relais, d'un transistor de type MOSFET, ou autres. En particulier, la transmission du signal de commande externe émis par un calculateur duplex externe à un stator passe par le premier interrupteur et le quatrième interrupteur, tous les deux pilotés par le signal de validité émis par ce calculateur duplex externe, afin d'assurer qu'en cas de panne en court-circuit du premier ou du quatrième interrupteur, suivie d'une invalidité du calculateur duplex externe, le mécanisme de basculement n'interconnecte pas la commande émise par le calculateur duplex externe avec la commande émise par le calculateur simplex interne.

Selon une possibilité compatible avec les précédentes, le calculateur simplex interne peut comporter trois connexions de validation externe connectées respectivement aux trois calculateurs duplex externes pour recevoir un signal de validité émis par chaque calculateur duplex externe, le calculateur simplex interne étant configuré pour émettre vers chaque dispositif de basculement un signal de sélection en fonction au moins du signal de validité émis par le calculateur duplex externe en communication avec ce dispositif de basculement.

Le signal de validité émis par un calculateur duplex externe peut en particulier être émis par sa voie de calcul de surveillance, voire sa voie de calcul de commande.

Le calculateur simplex interne peut être configuré pour évaluer la validité des signaux de commande à l'aide des signaux de validité de manière usuelle. Dès lors, le calculateur simplex interne émet un signal de sélection dès qu'un signal de validité est porteur d'une information indiquant que le calculateur duplex associé dysfonctionne, pour contrôler le stator concerné. Le calculateur simplex interne peut être configuré pour prendre la main sur un seul stator, à savoir en lieu et place du premier calculateur jugé défectueux parmi les calculateurs duplex.

Selon une possibilité compatible avec les précédentes, le calculateur simplex interne peut comporter une unique voie de calcul munie d'un microprocesseur ou d'un microcontrôleur ayant un premier cœur et un deuxième cœur configurés pour réaliser les mêmes opérations en parallèle.

Selon une possibilité compatible avec les précédentes, ledit actionneur électrique peut comporter un premier et un deuxième senseurs de position secondaires mesurant chacun une position angulaire de l'organe rotorique, le calculateur simplex interne comportant une connexion de commande externe connectée au sous-ensemble de traitement pour recevoir une consigne positionnelle, le calculateur simplex interne comportant une connexion positionnelle recevant une position courante d'un organe de la servocommande, le calculateur simplex interne comprenant un premier cœur configuré pour déterminer un premier ordre intermédiaire en fonction de la consigne positionnelle ainsi que de la position courante et des positions angulaires transmises par le premier senseur de position secondaire et le deuxième senseur de position secondaire, le calculateur simplex interne comprenant un deuxième cœur configuré pour déterminer un deuxième ordre intermédiaire en fonction de la consigne positionnelle ainsi que de la position courante et des positions angulaires transmises par le premier senseur de position secondaire et le deuxième senseur de position secondaire, ledit calculateur simplex interne étant configuré pour consolider un ordre final à l'aide du premier ordre et du deuxième ordre, ledit calculateur simplex interne émettant vers chaque dispositif de basculement un signal de commande interne porteur dudit ordre final.

L'utilisation de deux senseurs de position secondaires permet de prendre en considération la légère déformation de l'organe rotorique qui peut être provoquée en fonctionnement par les stators. Eventuellement, l'organe rotorique s'étendant d'une première extrémité à une deuxième extrémité, les deux senseurs de position secondaires peuvent être agencés respectivement à la première extrémité et à la deuxième extrémité.

Selon une alternative, le premier cœur et le deuxième cœur peuvent effectuer un contrôle de cohérence entre eux afin de garantir l'intégrité des calculs. Si ce contrôle de cohérence permet de conclure à la cohérence des premier et deuxième ordres, l'ordre final peut par exemple être égal à un des premier et deuxième ordres, ou à une moyenne des premier et deuxième ordres par exemple. Dans la négative, le calculateur simplex interne peut être rendu inopérant.

Selon une autre alternative, le calculateur simplex interne peut prendre la forme d'une unité de traitement à double cœurs dite « lockstep » en langue anglaise afin d'assurer l'intégrité des calculs. Une telle unité peut comprendre un microcontrôleur ou un composant connu sous l'acronyme « SoC » et l'expression anglaise « System On Chip » ayant le premier et le deuxième cœurs et au moins un périphérique, dont un périphérique usuel de gestion de cohérence entre les opérations effectuées par les cœurs. Ce périphérique contrôle que les flux d'exécutions sur les deux cœurs sont bien identiques et que les résultats sont également identiques. Si ce n'est pas le cas, le calculateur simplex interne est invalidé. En revanche, si c'est le cas, l'ordre final peut être égal à un des premier et deuxième ordres par exemple.

L'invention vise en outre un aéronef muni d'une gouverne aérodynamique reliée mécaniquement par une liaison mécanique à une servocommande hydraulique. L'aéronef comporte un système de commande de vol selon l'invention, ledit organe rotorique de l'actionneur électrique étant relié cinématiquement à un distributeur hydraulique de la servocommande.

Eventuellement, le calculateur simplex interne et les calculateurs duplex externes peuvent être connectés électriquement à des senseurs positionnels respectifs de la servocommande.

L'invention et ses avantages apparaîtront avec plus de détails dans le cadre de la description qui suit avec des exemples donnés à titre illustratif en référence aux figures annexées qui représentent :
la figure 1, une vue d'un aéronef ayant un système de commande de vol électrique comprenant un actionneur électrique selon l'invention, et
la figure 2, une vue d'un dispositif de basculement selon l'invention.

Les éléments présents dans plusieurs figures distinctes sont affectés d'une seule et même référence.

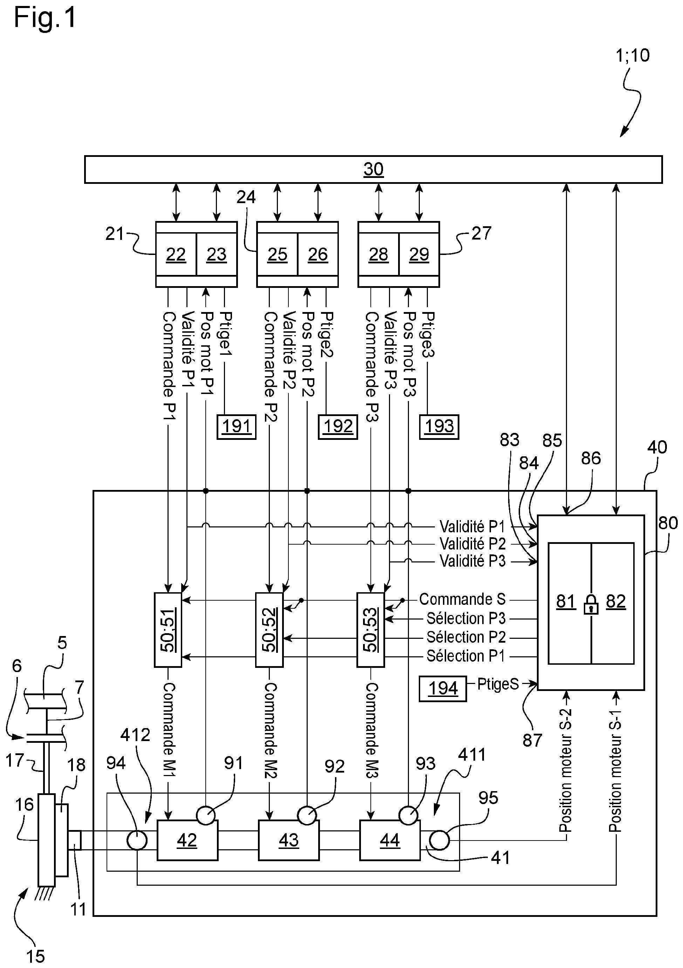

La figure 1 présente un aéronef 1 muni d'au moins une gouverne aérodynamique 5 ayant une position réglable pour diriger cet aéronef 1. La position de la gouverne aérodynamique 5 peut être modifiée par une servocommande 15 hydraulique.

A cet effet, la servocommande 15 est reliée par une liaison mécanique à la gouverne aérodynamique 5. Une telle servocommande hydraulique 15 peut comporter de manière classique un distributeur hydraulique 18, ainsi qu'au moins un corps 16 et une tige de puissance 17 mobiles l'un par rapport à l'autre sous l'effet de la circulation d'un fluide hydraulique acheminé dans le distributeur hydraulique 18.

Selon l'exemple de la figure 1, l'aéronef 1 est un giravion comprenant un rotor muni d'une pale 5 à pas variable. Cet exemple comporte une servocommande 15 ayant un corps 16 fixe et une tige de puissance 17 articulée à un dispositif à plateau cyclique 6, au moins une biellette de commande de pas 7 étant articulée à la pale 5 et à ce dispositif à plateau cyclique 6. Selon un autre exemple, une gouverne aérodynamique 5 peut prendre la forme d'un volet mobile par exemple.

Par ailleurs, la servocommande hydraulique 15 est commandée par un système 10 de commande de vol électrique.

Le système 10 de commande de vol électrique comprend un sous-ensemble de traitement 30 générant au moins une consigne positionnelle, à atteindre pour positionner de la manière requise la gouverne aérodynamique, et un sous-ensemble d'actionnement pilotant un actionneur électrique 40 en fonction de ladite au moins une consigne positionnelle.

Cet actionneur électrique 40 est muni d'une pluralité de stators 42, 43, 44 et d'un organe rotorique 41 mis en mouvement par une pluralité de stators 42, 43, 44. L'organe rotorique 41 est connecté mécaniquement à un levier 11 du distributeur hydraulique 18 de la servocommande 15. Ainsi, une rotation de cet organe rotorique 41 sous l'effet de champs magnétiques induit une sollicitation du distributeur hydraulique 18 pour étendre ou rétracter la servocommande 15. L'actionneur électrique 40 et la servocommande 15 peuvent former un seul et même équipement, ou deux équipements distincts.

Cet actionneur électrique 40 est connecté à trois calculateurs duplex externes 21, 24, 27 du sous-ensemble d'actionnement. En outre, les trois calculateurs duplex externes 21, 24, 27 et l'actionneur électrique 40 sont tous connectés au sous-ensemble de traitement 30 pour que l'actionneur électrique 40 soit commandé en fonction de chaque consigne positionnelle générée par le sous-ensemble de traitement 30.

Ainsi, le sous-ensemble de traitement 30 comporte de manière classique un ou des calculateurs configurés pour élaborer et transmettre au moins une consigne positionnelle aux trois calculateurs duplex externes 21, 24, 27 et à l'actionneur électrique 40. Si plusieurs consignes positionnelles relatives à un même paramètre sont émises par des calculateurs redondés, les trois calculateurs duplex externes 21, 24, 27 et l'actionneur électrique 40 peuvent être configuré pour utiliser une des consignes positionnelles en appliquant une méthode classique de sélection. Par exemple, cette consigne positionnelle est relative à une position que doit atteindre la tige de puissance 17 par rapport au corps 16, ou inversement dans le cadre d'une servocommande 15 à corps mobile.

Dès lors, chaque calculateur duplex externe 21, 24, 27 génère de manière classique un signal de commande externe CommandeP1, CommandeP2, CommandeP3 et un signal de validité ValiditéP1, ValiditéP2, ValiditéP3 en fonction au moins de la ou des consignes positionnelles reçues.

A cet effet, les trois calculateurs duplex externes 21, 24, 27 ont chacun une voie de calcul de commande 22, 25, 28 générant le signal de commande externe CommandeP1, CommandeP2, CommandeP3 et une voie de calcul de surveillance 23, 26, 29 générant le signal de validité ValiditéP1, ValiditéP2, ValiditéP3. La voie de calcul de commande 22, 25, 28 et la voie de calcul de surveillance 23, 26, 29 d'un même calculateurs externe duplex 21, 24, 27 peuvent être indépendantes et synchronisées.

Par exemple, la voie de calcul de commande 22, 25, 28 de chaque calculateur duplex externe 21, 24, 27 est configurée pour générer un signal de commande, par exemple analogique, transmis à l'actionneur électrique 40 et à sa voie de calcul de surveillance 23, 26, 29. De plus, la voie de calcul de surveillance 23, 26, 29 d'un calculateur duplex externe 21, 24, 27 est configurée pour vérifier que la voie de calcul de commande 22, 25, 28 de ce même calculateur duplex externe 21, 24, 27 fonctionne correctement, par exemple en effectuant des calculs devant amener à un même résultat que le résultat porté par le signal de commande. La voie de calcul de surveillance 23, 26, 29 émet alors un signal de validité ValiditéP1, ValiditéP2, ValiditéP3, par exemple analogique, indiquant si la voie de calcul de commande 22, 25, 28 associée fonctionne correctement ou dysfonctionne.

Pour permettre aux calculateurs duplex externes 21, 24, 27 d'élaborer les signaux de commande et les signaux de validité, l'actionneur électrique 40 peut comporter trois senseurs de position primaire 91, 92, 93 mesurant chacun une position angulaire de l'organe rotorique 41, par exemple au niveau du stator associé. Les trois senseurs de position primaire 91, 92, 93 sont connectés respectivement aux trois calculateurs duplex externes 21, 24, 27 pour leur transmettre respectivement trois signaux de mesure PosMot P1, PosMot P2, PosMot P3. Eventuellement, les calculateurs duplex externes 21, 24, 27 sont en outre reliés à des senseurs positionnels 191, 192, 193 respectifs de la servocommande 15 mesurant chacun une position situationnelle de la servocommande 15. Chaque senseur positionnel 191, 192, 193 peut mesurer une position de la tige de puissance 17 par rapport au corps 16 par exemple et la transmettre au travers d'un signal de position de tige Ptige1, Ptige2, Ptige3.

Ainsi chaque voie de calcul de commande 22, 25, 28 d'un calculateur duplex externe 21, 24, 27 peut appliquer une loi mémorisée pour émettre un signal de commande externe qui est fonction de la consigne positionnelle reçue, voire de la position angulaire reçue et/ou de la position situationnelle reçue. De même, chaque voie de calcul de surveillance 23, 26, 29 peut prendre en compte ces paramètres pour évaluer le fonctionnement de la voie de calcul de commande 22, 25, 28 de son calculateur duplex externe.

Indépendamment de ces aspects, l'actionneur électrique 40 est muni d'un organe rotorique 41 mis en mouvement par des champs magnétiques tournants générés par trois stators 42, 43, 44. Les trois stators 42, 43, 44 sont connectés électriquement respectivement à trois dispositifs de basculement 50 de l'actionneur électrique 40. La référence 50 désigne n'importe lequel des dispositifs de basculement, les références 51, 52, 53 désignant chacune un dispositif de basculement particulier si besoin.

Les dispositifs de basculement 50 sont chacun connectés à la voie de commande 22, 25, 28 et à la voie de surveillance 23, 26, 29 du calculateur duplex externe 21, 24, 27 correspondant. Ainsi, un premier stator 42 est connecté électriquement à un premier dispositif de basculement 51 qui est connecté aux voies de calcul 22, 23 d'un premier calculateur duplex externe 21, un deuxième stator 43 est connecté électriquement à un deuxième dispositif de basculement 52 qui est connecté aux voies de calcul 25, 26 d'un deuxième calculateur duplex externe 24, et un troisième stator 44 est connecté électriquement à un troisième dispositif de basculement 53 qui est connecté aux voies de calcul 28, 29 d'un troisième calculateur duplex externe 27.

En outre, les dispositifs de basculement 50 sont tous reliés électriquement à un même calculateur simplex interne 80 de l'actionneur électrique 40. Dès lors, chaque dispositif de basculement 50 est configuré pour connecter, à chaque instant, au stator 42, 43, 44 associé le calculateur simplex interne 80 ou le calculateur duplex externe 21, 24, 27 respectif, et ainsi transmettre un signal CommandeM1, CommandeM2, CommandeM3 à ce stator.

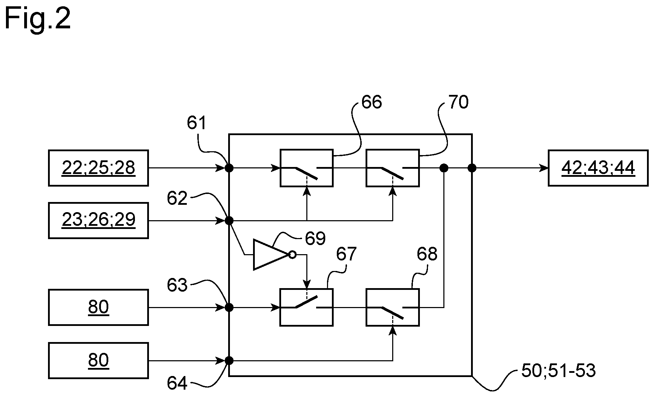

La figure 2 illustre un tel dispositif de basculement 50.

Ainsi, chaque dispositif de basculement 50 a un premier interrupteur 66 et un quatrième interrupteur 70 connectés en série à la voie de commande 22, 25, 28 du calculateur duplex externe 21, 24, 27 correspondant, par exemple via une première prise 61 de l'actionneur électrique 40. Lorsque le premier interrupteur 66 et le quatrième interrupteur 70 sont fermés, ce premier interrupteur 66 et ce quatrième interrupteur 70 transmettent ainsi au stator 42,43,44 correspondant un signal de commande externe CommandeP1, CommandeP2, CommandeP3 émis par la voie de calcul de commande 22, 25, 28 du calculateur duplex externe 21, 24, 27 associé. A cet effet, le premier interrupteur 66 et le quatrième interrupteur 70 sont reliés électriquement à la voie de surveillance 23, 26, 29 du calculateur duplex externe 21, 24, 27 correspondant, par exemple via une deuxième prise 62 de l'actionneur électrique 40, pour être placé dans un état fermé si le signal de validité ValiditéP1, ValiditéP2, ValiditéP3 reçu indique que la voie de calcul de commande 22, 25, 28 fonctionne correctement, ou dans un état ouvert dans la négative.

En outre, chaque dispositif de basculement 50 a un deuxième interrupteur 67 et un troisième interrupteur 68 connectés en série électriquement d'une part au calculateur simplex interne 80, par exemple via une troisième prise 63 de l'actionneur électrique 40 pour pouvoir recevoir un signal de commande interne CommandeS et, d'autre part au stator 42, 43, 44 correspondant.

Le deuxième interrupteur 67 est relié électriquement à la voie de surveillance 23, 26, 29 du calculateur duplex externe 21, 24, 27 correspondant, éventuellement par une porte inverseuse 69, voire la deuxième prise 62 de l'actionneur électrique 40 pour être placé dans un état ouvert si le signal de validité ValiditéP1, ValiditéP2, ValiditéP3 indique que le signal de commande correspondant est valide, et fermé dans la négative. Enfin, le troisième interrupteur 68 est relié électriquement à une connexion du calculateur simplex interne 80 transmettant un signal de sélection SélectionP1, SélectionP2, SélectionP3, par exemple via une quatrième prise 64 de l'actionneur électrique 40, pour être placé dans un état ouvert si le signal de sélection SélectionP1, SélectionP2, SélectionP3 reçu indique que le signal de commande correspondant est valide, et fermé dans la négative.

Par suite, si le signal de commande transmis est valide, le premier interrupteur 66 et le quatrième interrupteur 70 sont fermés alors que le deuxième interrupteur 67 et le troisième interrupteur 68 sont ouverts, ce qui permet au signal de commande externe émis par le calculateur duplex externe 21, 24, 27 associé d'être transmis au stator 42,43,44. A l'inverse, si le signal de commande transmis est invalide, le premier interrupteur 66 et le quatrième interrupteur 70 sont ouverts alors que le deuxième interrupteur 67 et le troisième interrupteur 68 sont fermés, ce qui permet au signal de commande interne CommandeS émis par le calculateur interne simplex 80 d'être transmis au stator 42,43,44.

Pour piloter les dispositifs de basculement 50 et en référence à la figure 1, le calculateur simplex interne 80 comporte trois connexions de validation externe 83, 84, 85 reliées respectivement aux trois voies de calcul de surveillance 23, 26, 29 pour recevoir les signaux de validité ValiditéP1, ValiditéP2, ValiditéP3 émis par le calculateur duplex externe 21, 24, 27 correspondant.

Le calculateur simplex interne 80 est configuré pour émettre, si nécessaire, vers chaque dispositif de basculement 50 le signal de sélection SélectionP1, SélectionP2, SélectionP3 respectif en fonction au moins du signal de validité ValiditéP1, ValiditéP2, ValiditéP3 émis par le calculateur duplex externe 21, 24, 27 en communication avec ce dispositif de basculement 50. Si un signal de validité indique que le calculateur duplex externe 21, 24, 27 concerné est défectueux, alors le calculateur simplex interne 80 émet le signal de sélection associé vers le dispositif de basculement 50 concerné.

Ce calculateur simplex interne 80 est en outre auto-monitoré. Ainsi, le calculateur simplex interne 80 peut comporter une unique voie de calcul munie d'un microprocesseur ou d'un microcontrôleur ayant un premier cœur 81 et un deuxième cœur 82 configurés pour réaliser les mêmes opérations en parallèle.

En outre, l'actionneur électrique 40 peut comporter un premier et un deuxième senseurs de position secondaires 94, 95 mesurant chacun une position angulaire de l'organe rotorique 41 en transmettant respectivement vers le calculateur simplex interne 80 des mesures PositionmoteurS-1 et PositionmoteurS-2. L'organe rotorique 41 s'étendant d'une première extrémité 411 à une deuxième extrémité 412, les deux senseurs de position secondaires 94, 95 peuvent être agencés respectivement à la première extrémité 411 et à la deuxième extrémité 412.

Eventuellement, le calculateur simplex interne 80 peut comporter une connexion de commande externe 86 connectée au sous-ensemble de traitement 30 pour recevoir une consigne positionnelle à atteindre et une connexion positionnelle 87 connectée à un senseur positionnel 194 recevant une position courante PtigeS d'un organe de la servocommande 15, et selon l'exemple décrit précédemment de la tige de puissance 17 par rapport au corps 16.

Le premier cœur 81 peut alors être configuré pour déterminer, par exemple à l'aide d'une loi mémorisée, un premier ordre intermédiaire en fonction de la consigne positionnelle voire de la position courante et des mesures PositionmoteurS-1, PositionmoteurS-2 transmises par le premier senseur de position secondaire 94 et le deuxième senseur de position secondaire 95. De même, le deuxième cœur 82 est configuré pour déterminer, par exemple à l'aide d'une loi mémorisée, un deuxième ordre intermédiaire en fonction de la consigne positionnelle voire de la position courante et des mesures PositionmoteurS-1, PositionmoteurS-2 transmises par le premier senseur de position secondaire 94 et le deuxième senseur de position secondaire 95.

Eventuellement, le premier cœur 81 et le deuxième cœur 82 communiquent entre eux pour consolider un ordre final à l'aide du premier ordre et du deuxième ordre. Par exemple, l'ordre final peut être un des premier ordre et deuxième ordre si une différence entre le premier ordre et le deuxième ordre est inférieure à une limite ou peut être une moyenne du premier ordre et du deuxième ordre selon une autre possibilité. Le calculateur simplex interne 80 émet alors vers chaque dispositif de basculement 50 le signal de commande interne CommandeS porteur dudit ordre final.

Selon une autre possibilité, le calculateur simplex interne 80 peut comporter un périphérique de gestion de cohérence pour évaluer la cohérence des calculs.

Ainsi, dans des conditions nominales, les dispositifs de basculement 50 transmettent un signal de commande externe, par exemple analogique, provenant du calculateur duplex externe 21, 24, 27 associé vers le stator 42,43,44 associé. Si un des calculateurs duplex externes 21, 24, 27 est jugé défectueux, alors le signal de validité émis par le calculateur duplex externe 21, 24, 27 défectueux et le signal de sélection correspondant changent afin que le dispositif de basculement 50 transmette au stator 42,43,44 non plus le signal de commande externe erroné mais le signal de commande interne.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Système (10) de commande de vol électrique pour commander une servocommande (15) hydraulique, ledit système (10) de commande de vol comprenant un sous-ensemble de traitement (30) générant au moins une consigne positionnelle, ledit système (10) de commande de vol comprenant un sous-ensemble d'actionnement, ledit système (10) de commande de vol comprenant un actionneur (40) électrique pour contrôler la servocommande (15), ledit actionneur (40) électrique comprenant une pluralité de stators (42, 43, 44) et un organe rotorique (41) mis en mouvement par ladite pluralité de stators (42, 43, 44),
**caractérisé en ce que** le sous-ensemble d'actionnement comporte trois calculateurs duplex externes (21, 24, 27) pour commander ledit actionneur (40) électrique en fonction de ladite au moins une consigne positionnelle, ladite pluralité de stators comportant uniquement trois stators (42, 43, 44) connectés électriquement à trois dispositifs de basculement (50) respectifs de l'actionneur (40) électrique, les dispositifs de basculement (50) étant reliés électriquement à un même calculateur simplex interne (80) de l'actionneur (40) électrique, chaque dispositif de basculement (50) étant connecté à un des calculateurs duplex externes (21, 24, 27) respectif, chaque dispositif de basculement (50) étant configuré pour connecter au stator (42, 43, 44) associé le calculateur simplex interne (80) ou le calculateur duplex externe (21, 24, 27) respectif, le calculateur simplex interne (80) étant auto-monitoré et communiquant avec les trois calculateurs duplex externes (21, 24, 27).

2. Système de commande de vol selon la revendication 1,
**caractérisé en ce que** chaque calculateur duplex externe (21, 24, 27) comporte une voie de commande (22, 25, 28) générant un signal de commande externe (CommandeP1, CommandeP2, CommandeP3) en fonction au moins de ladite au moins une consigne positionnelle, chaque calculateur duplex externe (21, 24, 27) comportant une voie de surveillance (23, 26, 29) générant un signal de validité (ValiditéP1, ValiditéP2, ValiditéP3).

3. Système de commande de vol selon la revendication 2,
**caractérisé en ce que** ledit actionneur (40) électrique comporte trois senseurs de position primaire (91, 92, 93) mesurant chacun une position angulaire de l'organe rotorique (41), les trois senseurs de position primaire (91, 92, 93) étant connectés respectivement aux trois calculateurs duplex externes (21, 24, 27), chaque calculateur duplex externe (21, 24, 27) étant configuré pour générer un signal de commande externe (CommandeP1, CommandeP2, CommandeP3) en fonction au moins de ladite au moins une consigne positionnelle et de ladite position angulaire.

4. Système de commande de vol selon la revendication 3,
**caractérisé en ce que** chaque calculateur duplex externe (21, 24, 27) est configuré pour recevoir une position courante d'un organe de la servocommande (15) , chaque calculateur duplex externe (21, 24, 27) étant configuré pour générer un signal de commande externe (CommandeP1, CommandeP2, CommandeP3) en fonction de ladite au moins une consigne positionnelle et de ladite position angulaire ainsi que la position courante.

5. Système de commande de vol selon l'une quelconque des revendications 2 à 4,
**caractérisé en ce que** chaque dispositif de basculement (50) est connecté à la voie de commande (22, 25, 28) et à la voie de surveillance (23, 26, 29) du calculateur duplex externe (21, 24, 27) correspondant, chaque dispositif de basculement (50) étant connecté au calculateur simplex interne (80) pour pouvoir recevoir un signal de commande interne (CommandeS) et un signal de sélection (SélectionP1, SélectionP2, SélectionP3) émis par ce calculateur simplex interne (80), chaque dispositif de basculement (50) étant configuré pour transmettre au stator (42, 43, 44) correspondant le signal de commande interne (CommandeS) ou le signal de commande externe (CommandeP1, CommandeP2, CommandeP3) en fonction du signal de sélection (SélectionP1, SélectionP2, SélectionP3) et du signal de validité (ValiditéP1, ValiditéP2, ValiditéP3).

6. Système de commande de vol selon la revendication 5,
**caractérisé en ce que** chaque dispositif de basculement (50) comporte un premier interrupteur (66) et un quatrième interrupteur (70) connectés en série à la voie de commande (22, 25, 28) du calculateur duplex externe (21, 24, 27) correspondant et au stator (42, 43, 44) correspondant, chaque dispositif de basculement (50) comportant un deuxième interrupteur (67) et un troisième interrupteur (68) connectés en série au calculateur simplex interne (80) pour pouvoir recevoir le signal de commande interne (CommandeS) et au stator (42, 43, 44) correspondant, le premier interrupteur (66) et le quatrième interrupteur (70) étant reliés électriquement à la voie de surveillance (23, 26, 29) du calculateur duplex externe (21, 24, 27) correspondant pour être placé chacun dans un état ouvert ou fermé en fonction du signal de validité (ValiditéP1, ValiditéP2, ValiditéP3) reçu, le deuxième interrupteur (67) étant relié électriquement à la voie de surveillance (23, 26, 29) du calculateur duplex externe (21, 24, 27) correspondant pour être placé dans un état ouvert ou fermé en fonction du signal de validité (ValiditéP1, ValiditéP2, ValiditéP3) reçu, le troisième interrupteur (68) étant relié électriquement au calculateur simplex interne (80) pour pouvoir recevoir le signal de sélection (SélectionP1, SélectionP2, SélectionP3) pour être placé dans un état ouvert ou fermé en fonction du signal de sélection (SélectionP1, SélectionP2, SélectionP3) reçu.

7. Système de commande de vol selon l'une quelconque des revendications 1 à 6,
**caractérisé en ce que** ledit calculateur simplex interne (80) comporte trois connexions de validation externe (83, 84, 85) connectées respectivement aux trois calculateurs duplex externes (21, 24, 27) pour recevoir un signal de validité (ValiditéP1, ValiditéP2, ValiditéP3) émis par chaque calculateur duplex externe (21, 24, 27), ledit calculateur simplex interne (80) étant configuré pour émettre vers chaque dispositif de basculement (50) un signal de sélection (SélectionP1, SélectionP2, SélectionP3) en fonction au moins du signal de validité (ValiditéP1, ValiditéP2, ValiditéP3) émis par le calculateur duplex externe (21, 24, 27) en communication avec ce dispositif de basculement (50).

8. Système de commande de vol selon l'une quelconque des revendications 1 à 7,
**caractérisé en ce que** ledit calculateur simplex interne (80) comporte une unique voie de calcul munie d'un microprocesseur ou d'un microcontrôleur ayant un premier cœur (81) et un deuxième cœur (82) configurés pour réaliser les mêmes opérations en parallèle.

9. Système de commande de vol selon l'une quelconque des revendications 1 à 8,
**caractérisé en ce que** ledit actionneur (40) électrique comporte un premier et un deuxième senseurs de position secondaires (94, 95) mesurant chacun une position angulaire de l'organe rotorique (41), ledit calculateur simplex interne (80) comportant une connexion de commande externe (86) connectée au sous-ensemble de traitement (30) pour recevoir une consigne positionnelle, ledit calculateur simplex interne (80) comportant une connexion positionnelle (87) recevant une position courante d'un organe de la servocommande (15), ledit calculateur simplex interne (80) comprenant un premier cœur (81) configuré pour déterminer un premier ordre intermédiaire en fonction de la consigne positionnelle ainsi que de la position courante et des positions angulaires transmises par le premier senseur de position secondaire (94) et le deuxième senseur de position secondaire (95), ledit calculateur simplex interne (80) comprenant un deuxième cœur (82) configuré pour déterminer un deuxième ordre intermédiaire en fonction de la consigne positionnelle ainsi que de la position courante et des positions angulaires transmises par le premier senseur de position secondaire (94) et le deuxième senseur de position secondaire (95), ledit calculateur simplex interne (80) étant configuré pour consolider un ordre final à l'aide du premier ordre et du deuxième ordre, ledit calculateur simplex interne (80) émettant vers chaque dispositif de basculement (50) un signal de commande interne (CommandeS) porteur dudit ordre final.

10. Système de commande de vol selon la revendication 9,
**caractérisé en ce que** l'organe rotorique (41) s'étendant d'une première extrémité (411) à une deuxième extrémité (412), les deux senseurs de position secondaires (94, 95) sont agencés respectivement à la première extrémité (411) et à la deuxième extrémité (412).

11. Aéronef (1) muni d'une gouverne aérodynamique (5) reliée mécaniquement par une liaison mécanique (11) à une servocommande (15) hydraulique,
**caractérisé en ce que** ledit aéronef (1) comporte un système (10) de commande de vol selon l'une quelconque des revendications 1 à 10, ledit organe rotorique de l'actionneur étant relié cinématiquement à un distributeur hydraulique (18) de la servocommande (15).

12. Aéronef selon la revendication 11,
**caractérisé en ce que** le calculateur simplex interne (80) et les calculateurs duplex externes (21, 24, 27) sont connectés électriquement à des senseurs positionnels (191, 192, 193, 194) respectifs de la servocommande (15).
